# FASCICULE DE BREVET EUROPEEN

(11) **EP 1 201 624 B1**
(45) Date de publication et mention de la délivrance du brevet: **10.04.2013**
(21) Numéro de dépôt: 01420210.5
(22) Date de dépôt: 23.10.2001
(51) Int. Cl.: C04B 40/00, C04B 24/24, C04B 20/02, C04B 24/16, C04B 103/52

(54) **Procédé pour améliorer la résistance mécanique notamment "aux Jeunes âges" des matrices cimentaires, matrices cimentaires ainsi obtenues et leurs utilisations**
Verfahren zur Verbesserung der mechanischen Festigkeit von Zementmatrixen, im Besonderen der Früfestigkeit, die dadurch erhaltene Zementmatrixen und deren Verwendungen
Process for increasing the mechanical strength of cement matrixes, in particular at early stages, cement matrixes thus obtained and their uses

(30) Priorité: 25.10.2000 FR 0013661
(43) Date de publication de la demande: 02.05.2002
(73) Titulaire: COATEX S.A.S., 69730 Genay (FR)
(72) Inventeur: Gonnon, Pascal, 01480 Villeneuve (FR); Kensicher, Yves, 69380 Lozanne (FR); Jacquemet, Christian, 69005 Lyon (FR)

(56) Documents cités:
- EP-A- 0 246 181
- EP-A- 0 717 051
- EP-A- 0 742 186
- EP-A1- 0 892 111
- EP-A2- 0 271 435
- EP-A2- 0 725 043
- WO-A-98/57905
- FR-A- 2 792 932
- GB-A- 230 693
- US-A- 4 655 842
- US-A- 4 793 985
- US-A- 5 614 017

## Description

La présente invention concerne le secteur technique des suspensions de charges minérales, notamment de carbonates de calcium, plus précisément de charges broyées et notamment de carbonates de calcium broyés, et des additifs pour élaborer ces suspensions, notamment des agents d'aide au broyage, et plus précisément des agents d'aide au broyage conférant à ces suspensions de charges la capacité d'améliorer très notablement les propriétés mécaniques et plus particulièrement les propriétés de « résistance aux jeunes âges » des matrices cimentaires ou liants hydrauliques, plus particulièrement des bétons hydrauliques, préparés avec ces suspensions.

La présente invention concerne le secteur technique des mortiers, bétons, et autres compositions à base de ciment et/ou de sulfate de calcium hémihydrate, c'est-à-dire de manière générale des composés ou liants hydrauliques.

On sait que les matrices cimentaires telles bétons, mortiers, coulis, etc..., et plus particulièrement les bétons hydrauliques, recouvrent deux types principaux d'utilisation, les bétons prêts à l'emploi et les produits préfabriqués.

On sait qu'un béton est composé essentiellement d'un ciment et d'un granulat ainsi que d'eau et d'adjuvants ou additifs.

Selon la granulométrie, on classe les granulats en plusieurs catégories connues de l'homme du métier et définies par la norme française XP P 18-540.

Dans cette norme, les familles de granulats comprennent :
- les fillers 0/D où D < 2 mm avec au moins 70 % de passant à 0,063 mm,
- les sablons 0/D où D ≤ 1 mm avec moins de 70 % de passant à 0,063 mm,
- les sables 0/D où 1 < D ≤ 6,3 mm,
- les graves 0/D où D > 6,3 mm,
- les gravillons d/D où d > 1 mm et D s 125 mm,
- les ballasts d/D où d > 25 mm et D ≤ 50 mm,
avec d et D tels que définis dans ladite norme.

Dans la présente demande, on distingue parmi les fillers, les ultra-fins que l'on définit avec un diamètre médian inférieur ou égal à 20 micromètres mesuré à l'aide d'un granulomètre de type Cilas™ 850 ou Sédigraph™ 5100 en fonction de la granulométrie de la charge à mesurer.

Des exemples de fillers sont par exemple les laitiers vitrifiés moulus de haut fourneau, les cendres volantes et autres additions de silice de haute finesse, ou des additions calcaires comme du carbonate de calcium.

On connaît déjà l'incorporation, à des matrices cimentaires ou liants hydrauliques, de fumées de silice ou additions siliceuses, ou d'additions calcaires comme du carbonate de calcium.

En particulier, on sait utiliser le carbonate de calcium soit sous forme sèche soit sous forme de dispersion dans l'eau ou dans un milieu aqueux ne comportant pas de dispersant.

On connaît notamment le brevet WO 99/47468 qui décrit l'emploi de carbonate de calcium sous forme d'une dispersion aqueuse pour préparer des bétons. Ce document représente un exemple de technologie (tel que présenté par ailleurs ci-dessous) visant un compromis plus ou moins acceptable entre maniabilité et résistance aux jeunes âges. Toutefois, ce document se borne à incorporer un dispersant comme fluidifiant pour améliorer la fluidité, ce qui ressort des fonctions connues des dispersants dans l'art antérieur.

On connaît encore le brevet EP 0 271 435, le brevet EP 0 725 043 et le brevet US 5,614,017 qui concernent l'emploi de plastifiants dans les ciments en vue, respectivement, d'améliorer la résistance à la compression, ou diminuer le retrait, ou augmenter le temps d'ouvrabilité mesuré au cône d'Abrams encore appelé « slump ».

Dans le brevet EP 0 271 435, l'additif agit comme réducteur d'eau, ce qui est parfaitement conforme à la recherche d'un rapport eau/ciment (E/C) aussi faible que possible pour améliorer une résistance mécanique.

Dans le brevet EP 0 725 043, le plastifiant est utilisé à très faible concentration et le problème technique posé est totalement différent de celui de l'invention, de même que pour le brevet US 5,614,017.

Dans les trois cas, le granulat est du type filler 0/D tel que défini plus haut (D < 2 mm avec au moins 70 % de passant à 0,063 mm), le carbonate de calcium est employé en poudre sèche et non en dispersion, et l'ajout de l'adjuvant est effectué au moment de la préparation du béton, c'est à-dire « a posteriori » et non avant la préparation du béton comme selon l'invention.

On sait également utiliser des adjuvants pour défloculer la pâte de ciment et/ou réduire la quantité d'eau dans le ciment.

On sait, à ce propos, que si la proportion d'eau augmente dans une matrice cimentaire ou liant hydraulique, les résistances mécaniques sont amoindries. L'homme du métier s'efforce donc toujours, dans ses formulations, de diminuer le rapport eau/ciment E/C.

Cependant, l'homme du métier sait également que, si la proportion d'eau augmente dans une matrice cimentaire ou liant hydraulique, la maniabilité de celui-ci (c'est-à-dire son aptitude à être manipulé, pompé, etc... ) augmente.

L'homme du métier est donc très souvent forcé de rechercher un compromis entre les propriétés mécaniques et la maniabilité.

Parmi les propriétés mécaniques des matrices cimentaires ou liants hydrauliques, l'une des plus importantes pour l'homme du métier concerne « la résistance aux jeunes âges ».

Cette propriété est définie comme l'évolution de la courbe de résistance à la compression, en fonction de l'âge de préparation de la matrice cimentaire ou liant hydraulique, dans la zone de 0 heure à 7 jours suivant la préparation de la matrice cimentaire ou liant hydraulique, avec notamment une mesure normalisée à 2 jours et à 7 jours.

Comme on l'a vu ci-dessus, il existe un besoin important et reconnu pour un moyen visant à augmenter de manière significative cette propriété de résistance aux jeunes âges, sans affecter négativement d'autres propriétés intéressantes comme par exemple la maniabilité.

L'invention consiste à utiliser la charge minérale à incorporer à la matrice cimentaire ou liant hydraulique sous la forme d'une suspension de charge aqueuse minérale broyée, notamment de carbonate de calcium broyé, comportant au moins un agent d'aide au broyage selon l'invention, dont l'action, en combinaison avec les autres ingrédients, d'une manière non élucidée par le Demandeur, augmente la résistance mécanique et en particulier la résistance aux jeunes âges dans des proportions considérables.

Selon l'invention, on prépare la suspension aqueuse de charge minérale broyée par l'ajout du ou des agents d'aide au broyage lors du broyage de ladite charge. En d'autres termes, on n'incorpore pas le ou les agents d'aide au broyage directement dans la matrice cimentaire ou liant hydraulique.

L'invention concerne donc un procédé pour conférer aux matrices cimentaires ou liants hydrauliques tels bétons, mortiers, coulis ou encore composition à base de sulfate de calcium hémihydrate, une résistance mécanique améliorée et notamment une résistance mécanique aux jeunes âges améliorée.

Ce procédé vise à incorporer, à la préparation pour matrice cimentaire ou liant hydraulique choisi parmi un béton, un mortier, un béton hydraulique, un coulis ou encore une composition à base de ciment et/ou de sulfate de calcium hémihydrate dans le but de lui conférer une résistance mécanique améliorée, une charge minérale qui est le carbonate de calcium naturel, sous forme de suspension aqueuse de cette charge minérale, caractérisé en ce que ladite charge minérale est en suspension aqueuse à l'état broyé et en ce que ladite suspension aqueuse de charge minérale broyée contient au moins un agent d'aide au broyage consistant en un polymère de monomères éthyléniquement insaturés choisis parmi :
a) au moins un monomère anionique,
b) éventuellement au moins un monomère non ionique,
c) éventuellement au moins un monomère éthylénique ester, éther, ou uréthanne alkoxy-, aryloxy-, alkylaryloxy-, arylalkyloxy-polyalkylène glycol appelé parfois monomère spécial,
d) éventuellement un ou des monomères éthyléniques possédant au moins deux doubles liaisons polymérisables et appelés réticulants,
e) éventuellement au moins un monomère cationique.

Une famille de copolymère est décrite dans la demande de brevet français du Demandeur, non publiée, n° 9905665, où ces copolymères ont une fonction d'amélioration très notable de la maniabilité des liants hydrauliques.

Ainsi il est contraire aux connaissances de l'homme du métier de chercher à employer un tel agent de maniabilité comme agent d'aide au broyage dans la préparation de suspension de charge minérale mise en oeuvre dans la fabrication des matrices cimentaires ou des liants hydrauliques.

De même, il était a priori contraire à l'ensemble de l'art antérieur de chercher à préparer une matrice cimentaire à l'aide de suspensions aqueuses contenant au moins un agent d'aide au broyage.

Le ou les monomères éthyléniquement insaturés sont choisis parmi l'un au moins des monomères anioniques éthyléniquement insaturés tels que l'acide acrylique et/ou méthacrylique, itaconique, crotonique, fumarique, anhydride maléique ou encore isocrotonique, aconitique, mésaconique, sinapique, undécylénique, angélique, l'acide 2-acrylamido-2-methyl-1-propane sulfonique, l'acide 2-méthacrylamido-2-méthyl-1-propane sulfonique, l'acide 3-méthacrylamido-2-hydroxy-1-propane sulfonique, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl propène sulfonique, l'acide styrène sulfonique, l'acide vinyl sulfonique, le méthallylsulfonate de sodium, l'acrylate ou méthacrylate de sulfoéthyle ou sulfopropyle, le sulfométhylacrylamide, le sulfométhylméthacrylamide, le phosphate ou phosphonate ou sulfate ou sulfonate d'acrylate ou méthacrylate d'alkylène glycol, le vinylphosphonate ou sont choisis parmi au moins un monomère non ionique tel que l'acrylamide ou le méthacrylamide ou leurs dérivés, les alkyl-esters en C₁ à C₄₀ des acides acryliques ou méthacryliques, l'acétate de vinyle, la vinylpyrrolidone, le styrène ou encore l'alphaméthyl-styrène.

Le ou les monomères éthyléniquement insaturés sont aussi choisis parmi au moins un monomère éthylénique uréthanne alkoxy-, aryloxy-, alkylaryloxy-, arylalkyloxy-polyalkylène glycol, appelé parfois monomère spécial uréthanne, ou un monomère éthylénique ester alkoxy-, aryloxy-, alkylaryloxy-, arylalkyloxy-polyalkylène glycol tel qu'un acrylate, méthacrylate ou hémimaléate d'alkoxy-polyalkylène glycol ou encore un alkoxy-, aryloxy-, alkylaryloxy-, arylalkyloxy-acrylate ou méthacrylate ou hémimaléate oxyalkylé, oxyarylé, oxyarylalkylé, oxyalkylarylé (le nombre d'oxyde d'alkylène, d'arylène, d'alkylarylène ou d'arylalkylène étant compris entre 1 et 120), ou encore un monomère éthylénique éther alkoxy-, aryloxy-, alkylaryloxy-, arylalkyloxy-polyalkylène glycol, et un ou des monomères éthyléniques possédant au moins deux doubles liaisons polymérisables, appelés réticulants choisis d'une manière non limitative dans le groupe constitué par le diméthacrylate d'éthylène glycol, le divinylacétylène, le divinylbenzène, le triméthylolpropanetriacrylate, l'acrylate d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres.

De manière préférentielle, les polymères utilisés selon l'invention sont les copolymères obtenus par la copolymérisation radicalaire d'au moins un monomère anionique avec au moins un monomère éthylénique ester, éther ou uréthanne alkoxy-, aryloxy-, alkylaryloxy-, arylalkyloxy-polyalkylène glycol et plus particulièrement uréthanne alkoxy-PEG (polyéthylène glycol) et au moins un monomère non ionique en présence éventuelle d'acrylate ou méthacrylate ou hémimaléate d'alkoxy-, aryloxy-, alkylaryloxy-, arylalkyloxy-polyalkylène glycol et plus particulièrement d'alkoxy-, aryloxy-, alkylaryloxy-, arylalkyloxy-PEG, ledit PEG (polyéthylène glycol) étant défini par un poids moléculaire supérieur à 300, ainsi qu'en présence éventuelle de monomères éthyléniques possédant au moins deux doubles liaisons polymérisables, encore appelés réticulants choisis dans le groupe constitué par le diméthacrylate d'éthylène glycol, le divinylacétylène, le divinylbenzène, le triméthylolpropanetriacrylate, l'acrylate d'allyle, le méthylène-bis-acrylamide, le méthylène-bis-méthacaylamide, le tétrallyloxyéthane, les triallylcyanurates, les éthers allyliques obtenus à partir de polyols tels que le pentaérythritol, le sorbitol, le sucrose ou autres.

Dans certains cas, les polymères utilisés, selon la présente invention, peuvent être des copolymères de monomères cationiques éthyléniquement insaturés tels que par exemple le méthacrylamido propyl triméthyl ammonium chlorure (MAPTAC) ou sulfate, le méthacrylate de triméthyl ammonium éthyl chlorure ou sulfate, ainsi que leurs homologues en acrylate et en acrylamide quaternisés ou non et/ou le diméthyldiallylchlorure d'ammonium.

Le polymère, utilisé comme nouvel agent d'amélioration de la résistance aux jeunes âges pour matrices cimentaires ou liants hydrauliques selon l'invention est préparé par les procédés connus de la polymérisation radicalaire en solution, en émulsion, en suspension ou par précipitation du ou des monomères précités, en présence d'un système catalytique et d'agents de transfert connus, mis en oeuvre selon des quantités appropriées, le poids moléculaire dudit polymère étant ajusté à l'aide des moyens connus tels que par exemple la température, le taux de catalyseur, la présence ou non d'agents de transfert ou encore tout autre moyen ou combinaison de moyens connus de l'homme de l'art.

Le système catalytique de polymérisation, qui peut varier en quantité allant de 0,1 % à 20 % en poids par rapport à la masse totale des monomères, est souhaitablement choisi parmi ceux qui sont hydrosolubles tels que, par exemple, les persulfates de sodium, de potassium, d'ammonium ou les azoïques ou encore les peroxydes ou les hydroperoxydes tels que, notamment l'eau oxygénée, et éventuellement mis en oeuvre avec un composé réducteur connu tel que notamment le métabisulfite de sodium, l'hypophosphite de sodium, l'acide phosphoreux, l'acide hypophosphoreux ou encore les sels métalliques.

L'agent de transfert de chaîne est souhaitablement choisi parmi les alkyl-mercaptans tels que, par exemple, l'octanethiol, le décanethiol, le n-dodécanethiol, le t-dodécanethiol ou encore parmi l'acide mercapto-propionique, l'acide mercapto-succinique, l'acide thioglycolique ou encore le mercaptoéthanol ou encore les alcools secondaires, certains halogénures d'alkyle ou les sels des acides du phosphore de degré d'oxydation inférieur à 5, ainsi que divers autres additifs connus de l'homme du métier, en tant que limitateur de chaînes.

Dans toute la présente demande, les abréviations utilisées ont la signification suivante :
- PO₄MAEG: = phosphate de méthacrylate d'éthylène glycol
- MAEG: = méthacrylate d'éthylène glycol
- PEG 350: = polyéthylène glycol de poids moléculaire 350
- PEG 750: = polyéthylène glycol de poids moléculaire 750
et par analogie, tout nombre suivant les lettres PEG indique le poids moléculaire dudit PEG.
- AE: = acrylate d'éthyle
- Acryl: = acrylamide
- AMA: = acide méthacrylique
- AA: = acide acrylique
- TEA: = triéthanolamine
- TDI: = toluène diisocyanate
- IPDI: = isophorone diisocyanate

selon la présente invention on polymérise les monomères suivants :
a) au moins un monomère anionique,
b) éventuellement au moins un monomère non ionique,
c) éventuellement au moins un monomère éthylénique ester, éther, ou uréthanne alkoxy-, aryloxy-, alkylaryloxy-, arylalkyloxy-polyalkylène glycol appelé parfois monomère spécial,
d) éventuellement un ou des monomères éthyléniques possédant au moins deux doubles liaisons polymérisables et appelés réticulants,
e) éventuellement au moins un monomère cationique.

Le ou les monomères anioniques préférés sont choisis parmi l'acide acrylique, l'acide méthacrylique, l'acide 2-acrylamido-2-méthyl-1-propane sulfonique, l'acide 2-méthacrylamido-2-méthyl-1-propane sulfonique, l'acide 3-méthacrylamido-2-hydroxy-1-propane sulfonique, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl propène sulfonique, l'acide styrène sulfonique, l'acide vinyl sulfonique, le méthallylsulfonate de sodium, l'acrylate ou méthacrylate de sulfopropyle, le sulfométhylacrylamide, le sulfométhylméthacrylamide, le phosphate ou phosphonate ou sulfate ou sulfonate d'acrylate ou méthacrylate d'alkylène glycol, l'acide itaconique, l'anhydride maléique, le méthallylsulfonate de sodium, l'acide styrène sulfonique et plus particulièrement choisis parmi l'acide acrylique, l'acide méthacrylique, l'acide 2-acrylamido-2-méthyl-1-propane sulfonique, l'acide éthylène sulfonique, l'acide propène sulfonique, l'acide 2-méthyl propène sulfonique, le phosphate de méthacrylate d'éthylène glycol ou encore le phosphate d'acrylate d'éthylène glycol.

Le ou les monomères non ioniques préférés sont choisis parmi l'acrylamide ou le méthacrylamide ou leurs dérivés, les alkyl-esters en C₁ à C₄₀ des acides acryliques ou méthacryliques, l'acétate de vinyle, la vinylpyrrolidone, le styrène ou encore l'alphaméthyl-styrène et plus particulièrement parmi l'acrylamide ou l'acrylate d'éthyle.

Le ou les monomères ester alkoxy-, aryloxy-, alkylaryloxy-, arylalkyloxy-polyalkylène glycol sont particulièrement choisis parmi les acrylates, méthacrylates ou encore hémimaléates d'alkoxy-, aryloxy-, alkylaryloxy-, arylalkyloxy-polyalkylène glycol ou encore un alkoxy-, aryloxy-, alkylaryloxy-, arylalkyloxy-acrylate ou méthacrylate oxyalkylé, oxyarylé, oxyaarylalkylé, oxyalkylarylé (le nombre d'oxyde d'alkylène, d'arylène, d'alkylarylène ou d'arylalkylène étant compris entre 1 et 120).

Le ou les monomères uréthanne alkoxy-, aryloxy-, alkylaryloxy-, arylalkyloxy-polyalkylène glycol sont particulièrement choisis parmi les alkoxy-polyalkylène glycol, produits de réaction d'alkoxy-polyalkylène glycol avec un isocyanate insaturé polymérisable et plus particulièrement parmi les produits de réaction de méthoxy-PEG avec un isocyanate acrylique, méthacrylique, vinylique ou encore allylique, ledit PEG étant défini par un poids moléculaire supérieur à 300.

Le ou les monomères cationiques éthyléniquement insaturés sont particulièrement choisis parmi le méthacrylamido propyl triméthyl ammonium chlorure (MAPTAC) ou sulfate, le méthacrylate de triméthyl ammonium éthyl chlorure ou sulfate, ainsi que leurs homologues en acrylate et en acrylamide quaternisés ou non et/ou le diméthyldiallylchlorure d'ammonium.

Le polymère utilisé selon l'invention peut être, ultérieurement à l'étape de polymérisation, fractionné par les moyens de fractionnement bien connu de l'homme de l'art.

Ce polymère utilisé selon l'invention est mis en oeuvre sous forme totalement acide ou partiellement neutralisée ou totalement neutralisée par un ou plusieurs agents de neutralisation disposant d'une fonction monovalente et éventuellement d'une fonction polyvalente.

Les agents de neutralisation disposant d'une fonction monovalente sont choisis dans le groupe constitué par les composés contenant des cations alcalins, en particulier le sodium et le potassium ou encore le lithium, l'ammonium, ou bien les amines primaires ou secondaires aliphatiques et/ou cycliques telles que par exemple les éthanolamines, la mono et diéthylamine ou encore la cyclohexylamine.

Les agents de neutralisation disposant d'une fonction polyvalente sont choisis dans le groupe constitué par les composés contenant des cations divalents alcalino-terreux, en particulier le magnésium et le calcium ou encore le zinc, de même que par les cations trivalents, dont en particulier l'aluminium ou encore par certains composés contenant des cations de valence plus élevée.

A titre indicatif, des examples de charges minérales le carbonate de calcium naturel (craie, calcite, marbre ou autre carbonate de calcium naturel), le carbonate de calcium précipité, le carbonate de baryum, les roches carbonatées, la dolomie, le talc, la silice broyée, les silices en général, les fumées de silice, les fumées de dioxyde de titane, les diatomites, les oxydes de fer, les oxydes de manganèse, le dioxyde de titane, la chaux, le kaolin, les méta-kaolins, les argiles, le mica, les plâtres, les cendres volantes, les laitiers, le sulfate de calcium, les zéolites, le basalte, le sulfate de baryum, le trihydroxyde d'aluminium, ou leurs mélanges.

Dans le cadre de la présente invention, la charge minérale est le carbonate de calcium naturel.

Selon l'invention, on prépare la suspension de charge minérale broyée par une opération de broyage de la charge minérale à affiner, qui consiste à former une suspension aqueuse de la matière minérale à affiner contenant la matière minérale et le ou les agents d'aide au broyage, puis à broyer la charge minérale avec un corps broyant en particules très fines dans le milieu aqueux contenant le ou les agents d'aide au broyage.

Selon une variante de l'invention, on peut préparer la suspension du mélange de charges par une opération de co-broyage des charges, qui consiste à former une suspension aqueuse des charges minérales à affiner puis à co-broyer.

Une autre méthode de préparation d'une suspension de mélange de charges selon l'invention consiste à broyer chacune des charges séparément et selon le protocole précédemment décrit, puis à mélanger les suspensions de charge broyée.

Ledit agent d'aide au broyage est préférentiellement choisi parmi les polymères, selon l'invention, obtenus par polymérisation radicalaire d'éventuellement au moins un monomère éthylénique ester, éther ou uréthanne alkoxy-, aryloxy-, alkylaryloxy-, arylalkyloxy-polyalkylène glycol et plus particulièrement uréthanne alkoxy-polyéthylène glycol avec au moins un monomère anionique et éventuellement au moins un monomère non ionique en présence éventuelle de monomères éthyléniques possédant au moins deux doubles liaisons polymérisables, encore appelés réticulants.

Il est à noter que la concentration en matière sèche de ladite suspension peut varier de 10 % en poids à 85 % en poids.

On utilise selon l'invention une charge minérale broyée au stade ultra-fin, notamment un carbonate de calcium broyé jusqu'au stade ultra-fin, c'est-à-dire ayant un diamètre médian inférieur ou égal à 20 micromètres mesuré à l'aide d'un granulomètre de type Cilas™ 850 ou Sédigraph™ 5100 en fonction de la granulométrie de la charge à mesurer.

La présente description décrit également l'utilisation, dans le but de préparer une matrice cimentaire ou un liant hydraulique, d'une suspension de charge ou d'un mélange de charge caractérisée en ce que la ou les charges minérales sont en suspension à l'état broyé et en ce que ladite suspension contient au moins un agent d'aide au broyage tel que défini ci-dessus.

La présente description décrit également les matrices cimentaires ou liants hydrauliques comme les bétons, mortiers, coulis, ou compositions à base de ciment et/ou sulfate de calcium hémihydrate et plus particulièrement les bétons hydrauliques, contenant la suspension aqueuse de ou des charges minérales broyées au moyen d'au moins un agent d'aide au broyage améliorant la résistance aux jeunes âges selon l'invention.

La présente description décrit de plus l'utilisation des matrices cimentaires ou des liants hydrauliques contenant le nouvel agent améliorant la résistance aux jeunes âges selon l'invention dans la construction, le bâtiment, les travaux publics, les ouvrages d'art, les travaux offshore ou encore les ciments pétroliers et les services para-pétroliers.

La présente description décrit également tous les modes de réalisation et toutes les applications qui seront directement accessibles à l'homme du métier à la lecture de la présente demande, de ses connaissances propres, et éventuellement d'essais simples de routine.

D'autres caractéristiques et avantages de l'invention seront mieux compris à la lecture de la description qui va suivre, et des exemples La présente description décrit ci-dessous.

### EXEMPLE 1 :

Cet exemple concerne la mise en évidence de l'amélioration des propriétés mécaniques d'un mortier apportée par la mise en oeuvre de suspension de carbonate de calcium naturel broyé.

Dans ce but pour chacun des essais de l'exemple, on verse dans un malaxeur à mortier (EN 196-1) en position marche, les différents constituants du mortier standard dosé à 450 kg/m³ de ciment dont la composition est la suivante :
- 450 g de ciment CEM **I** 42.5R CP2 de Gaurain conforme à la norme NF P 15-301 ;
- la quantité de suspension de carbonate de calcium broyé à tester ;
- la quantité d'eau nécessaire ;
- une quantité variable en grammes de sable normalisé de Leucate (EN 196-1). Cette quantité de sable étant ajoutée selon la norme EN 196-1 pendant 30 secondes et après 30 secondes d'agitation lente du mélange des constituants précédemment ajoutés.

Les quantités des constituants sont ajustées pour chacun des mortiers des différents essais afin de travailler à compacité constante.

L'expérience a été menée sur des mortiers dont la rhéologie, mesurée au maniabilimètre à mortier défini par la norme NF P 15-412, est comprise entre 1 et 3 secondes.

Après 90 secondes de malaxage, ce dernier est stoppé afin de pouvoir racler les parois du malaxeur.

Une fois terminé le raclage du mortier adhérent sur les parois, le malaxage est repris pendant 1 minute à vitesse rapide.

Le respect de ces temps nous permet d'obtenir un cycle de malaxage qui dure 4 minutes et est conforme à la norme EN 196-1.

Dès la fin du balayage, les éprouvettes sont constituées et sont placées dans une enceinte climatique humide (EN 196-1) entre 20 et 24 heures puis démoulées, pesées et placées dans un bac de conservation. Ce mode opératoire est conforme à la norme EN 196-1.

A l'âge requis, ces éprouvettes sont sorties de leur enceinte de conservation puis testées en flexion et en compression selon la norme EN 196-1.

### Essai n° 1

Cet essai est un mortier témoin dosé à 450 kg/m³ sans carbonate de calcium avec un rapport eau/ciment E/C égal à 0,55.

### Essai n° 2

Cet essai est un mortier de l'art antérieur dosé à 450 kg/m³ mettant en oeuvre 10 % en poids, par rapport au poids sec de ciment, d'une calcite sous forme de poudre commercialisée sous le nom de Betocarb™ 2 avec un rapport E/C égal à 0,54.

### Essai n° 3

Cet essai est un mortier de l'art antérieur dosé à 450 kg/m³ mettant en oeuvre 30 % en poids, par rapport au poids sec de ciment, d'une calcite sous forme de poudre commercialisée sous le nom de Betocarb™ 2 avec un rapport E/C égal à 0,52.

### Essai n° 4

Cet essai illustre l'invention et est relatif à un mortier selon l'invention, dosé à 450 kg/m³ avec un rapport E/C égal à 0,55, mettant en oeuvre 10 % en poids sec, par rapport au poids sec de ciment, d'une suspension aqueuse de carbonate de calcium à 75 % en matière sèche obtenue par broyage d'une calcite jusqu'à un diamètre médian égal à 2 micromètres mesuré au Sédigraph™ 5100, au moyen de 0,75 %, en poids sec par rapport au poids sec de carbonate de calcium, d'un copolymère composé de :
- 15,0 % en poids d'acide méthacrylique,
- 65,0 % en poids de méthacrylate de méthoxy-PEG 750,
- 20,0 % en poids de méthacryluréthanne de méthoxy-PEG 750.

Dans ce but, avant le broyage de la calcite, on a préparé la suspension aqueuse de carbonate de calcium à partir de calcite de diamètre moyen de l'ordre de 50 micromètres à une concentration en matière sèche égale à 75 %.

Pour ce faire, 0,75 % en poids sec de l'agent d'aide au broyage précité, par rapport au poids sec du carbonate de calcium, est introduit dans la suspension aqueuse de carbonate de calcium formée.

La suspension circule dans un broyeur du type Dyno-Mill™ cylindre fixe et impulseur tournant, dont le corps broyant est constitué par des billes de corindon de diamètre compris dans l'intervalle 0,6 mm à 1,0 mm.

Le volume total occupé par le corps broyant est de 1 150 centimètres cubes tandis que sa masse est de 2 900 g.

La chambre de broyage a un volume de 1 400 centimètres cubes, la vitesse circonférentielle du broyeur est de 10 mètres par seconde et la suspension de carbonate de calcium est recyclée à raison de 18 litres par heure. La sortie du broyeur Dyno-Mill™ est munie d'un séparateur de mailles 200 micromètres permettant de séparer la suspension résultant du broyage et le corps broyant.

La température lors de l'essai de broyage est maintenue à 60°C environ.

La suspension de carbonate de calcium obtenue a alors la granulométrie recherchée et mesurée à l'aide d'un granulomètre Sédigraph™ 5100 de la société Micromeritics.

### Essai n° 5

Cet essai illustre l'invention et est relatif à un mortier selon l'invention, dosé à 450 kg/m³ avec un rapport E/C égal à 0,49, mettant en oeuvre 30 % en poids sec, par rapport au poids sec de ciment, de la même suspension aqueuse de carbonate de calcium que celle de l'essai n° 4.

Le mode opératoire et le matériel mis en oeuvre pour le broyage du carbonate de calcium sont identiques à ceux de l'essai n° 4.

Les résultats de mesure de la résistance à la compression à 2 jours, 7 jours et 28 jours pour les différents essais sont rassemblés dans le tableau I suivant.

**TABLEAU I**

| | TEMOIN | ART ANTERIEUR | ART ANTERIEUR | INVENTION | INVENTION |
|---|---|---|---|---|---|
| ESSAI n° | 1 | 2 | 3 | 4 | 5 |
| Masse de ciment en g | 450 | 450 | 450 | 450 | 450 |
| Masse de sable en g | 1580 | 1534 | 1475 | 1516 | 1516 |
| Masse de carbonate de calcium en g | 0 | 45 | 135 | 45 | 135 |
| Dosage en eau efficace en g | 248 | 242 | 234 | 248 | 220 |
| Rapport Eau efficace/Ciment | 0,55 | 0,54 | 0,52 | 0,55 | 0,49 |
| Maniabilité en secondes | 2,59 | 2,38 | 2,43 | 2,87 | 2,95 |
| Résistance à la compression en KN à 2 jours | 39,7 | 41,5 | 51,8 | 57,1 | 82,1 |
| Résistance à la compression en KN à 7 jours | 64,5 | 67,5 | 77,2 | 80,6 | 99,9 |
| Résistance à la compression en KN à 28 jours | 81,8 | - | - | 96,2 | 115,2 |
| Gain de résistance en % à 2 jours | 0 | 4,6 | 30,6 | 44 | 107 |
| Gain de résistance en % à 7 jours | 0 | 4,7 | 19,7 | 25 | 55 |
| Gain de résistance en % à 28 jours | 0 | - | - | 13 | 35 |

La lecture des résultats du Tableau I ci-dessus permet de mettre en évidence que les propriétés mécaniques de résistance à la compression d'un mortier (résistance à 2 jours, 7 jours et 28 jours) sont significativement améliorées par la mise en oeuvre, selon l'invention, d'une suspension de carbonate de calcium broyé c'est-à-dire d'une suspension de carbonate de calcium ultra-fin et plus particulièrement les propriétés de résistance aux jeunes âges (résistance à 2 jours et 7 jours).

### EXEMPLE 2

Cet exemple concerne la mise en oeuvre d'une suspension de carbonate de calcium broyé de granulométrie ultra-fine différente.

Dans ce but, on prépare un mortier standard dosé à 450 kg/m³, par la mise en oeuvre d'une suspension de carbonate de calcium broyé à un diamètre médian égal à 1,55 micromètres mesuré au Sédigraph™ 5100 à l'aide de 0,7 % de l'agent d'aide au broyage de l'essai n° 4 et avec le même matériel et même mode opératoire que l'essai n° 4.

La suspension est incorporée en remplacement des volumes d'eau et de sable de manière à travailler à compacité constante.

L'expérience a été menée sur des mortiers dont la rhéologie, mesurée au maniabilimètre, est comprise de 1 à 3 secondes selon le même mode opératoire que celui de l'exemple précédent.

### Essai n° 6

Cet essai est un mortier témoin dosé à 450 kg/m³ sans carbonate de calcium avec un rapport eau/ciment E/C égal à 0,54.

### Essai n° 7

Cet essai illustre l'invention et est relatif à un mortier selon l'invention, dosé à 450 kg/m³ avec un rapport E/C égal à 0,49, mettant en oeuvre 10 % en poids sec, par rapport au poids sec de ciment, de la suspension aqueuse de carbonate de calcium décrite ci-dessus, de diamètre médian égal à 1,55 micromètres.

Le mode opératoire et le matériel mis en oeuvre pour le broyage du carbonate de calcium sont identiques à ceux de l'essai n° 4.

### Essai n° 8

Cet essai illustre l'invention et est relatif à un mortier selon l'invention, dosé à 450 kg/m³ avec un rapport E/C égal à 0,44, mettant en oeuvre 30 % en poids sec, par rapport au poids sec de ciment, de la suspension aqueuse de carbonate de calcium décrite ci-dessus, de diamètre médian égal à 1,55 micromètres.

Le mode opératoire et le matériel mis en oeuvre pour le broyage du carbonate de calcium sont identiques à ceux de l'essai n° 4.

Les résultats de mesure de la résistance à la compression à 2 jours, 7 jours et 28 jours pour les différents essais sont rassemblés dans le tableau II suivant.

**[TABLEAU II]**

| | TEMOIN | INVENTION | INVENTION |
|---|---|---|---|
| ESSAI n° | 6 | 7 | 8 |
| Masse de ciment en g | 450 | 450 | 450 |
| Masse de sable en g | 1580 | 1526 | 1510 |
| Masse de carbonate de calcium en g | 0 | 45 | 135 |
| Dosage en eau efficace en g | 242 | 221 | 199 |
| Rapport Eau efficace/Ciment | 0,54 | 0,49 | 0,44 |
| Maniabilité en secondes | 2,79 | 2,11 | 2,74 |
| Résistance à la compression en KN à 2 jours | 35,4 | 52,9 | 73,5 |
| Résistance à la compression en KN à 7 jours | 60,1 | 77,4 | 91,5 |
| Résistance à la compression en KN à 28 jours | 76,7 | 89,9 | 104 |
| Gain de résistance en % à 2 jours | 0 | 49 | 107 |
| Gain de résistance en % à 7 jours | 0 | 29 | 52 |
| Gain de résistance en % à 28 jours | 0 | 17 | 35 |

La lecture des résultats du Tableau II ci-dessus permet de mettre en évidence que les propriétés mécaniques de résistance à la compression d'un mortier (résistance à 2 jours, 7 jours et 28 jours) sont significativement améliorées par la mise en oeuvre, selon l'invention, d'une suspension de carbonate de calcium broyé à une granulométrie ultra-fine différente de l'exemple précédent et plus particulièrement les propriétés de résistance aux jeunes âges (résistance à 2 jours et 7 jours).

### EXEMPLE 3:

Cet exemple concerne la mise en évidence de l'amélioration des propriétés mécaniques d'un mortier apportée par la mise en oeuvre de suspension de diverses charges broyées.

Dans ce but pour chacun des essais de l'exemple, on verse dans un malaxeur à mortier (EN 196-1) en position marche, les différents constituants du mortier standard dosé à 450 kg/m³ de ciment dont la composition est la suivante :
- 450 g de ciment CEM **I** 42.5R CP2 de Gaurain conforme à la norme NF P 15-301;
- la quantité de suspension de la charge broyée à tester (à l'exception de l'essai témoin pour lequel aucune suspension n'est mise en oeuvre) ;
- la quantité d'eau nécessaire ;
- une quantité variable en grammes de sable normalisé de Leucate (EN 196-1). Cette quantité de sable étant ajoutée selon la norme EN 196-1 pendant 30 secondes et après 30 secondes d'agitation lente du mélange des constituants précédemment ajoutés.

Les quantités des constituants sont ajustées pour chacun des mortiers des différents essais afin de travailler à compacité constante.

L'expérience a été menée sur des mortiers dont la rhéologie, mesurée au maniabilimètre à mortier défini par la norme NF P 15-412, est comprise entre 1 et 3 secondes.

Après 90 secondes de malaxage, ce dernier est stoppé afin de pouvoir racler les parois du malaxeur.

Une fois terminé le raclage du mortier adhérent sur les parois, le malaxage est repris pendant 1 minute à vitesse rapide.

Le respect de ces temps nous permet d'obtenir un cycle de malaxage qui dure 4 minutes et est conforme à la norme EN 196-1.

Dès la fin du malaxage, les éprouvettes sont constituées et sont placées dans une enceinte climatique humide (EN 196-1) entre 20 et 24 heures puis démoulées, pesées et placées dans un bac de conservation. Ce mode opératoire est conforme à la norme EN 196-1.

A l'âge requis, ces éprouvettes sont sorties de leur enceinte de conservation puis testées en flexion et en compression selon la norme EN 196-1.

### Essai n° 9

Cet essai est un mortier témoin dosé à 450 kg/m³ sans charge avec un rapport eau/ciment E/C égal à 0,55.

### Essai n° 10

Cet essai illustre l'invention et est relatif à un mortier selon l'invention, dosé à 450 kg/m³ avec un rapport E/C égal à 0,59, mettant en oeuvre 10 % en poids sec, par rapport au poids sec de ciment, d'une suspension aqueuse de fumée de silice à 58,2 % en matière sèche obtenue par broyage de la fumée de silice jusqu'à un diamètre médian égal à 3,03 micromètres mesuré au Sédigraph™ 5100, au moyen de 0,75 %, en poids sec par rapport au poids sec de fumée de silice, d'un copolymère, composé de :
- 5,0 % en poids de méthacrylamido propyl triméthyl ammonium chlorure
- 95,0 % en poids de méthacrylate de triméthyl ammonium éthyl chlorure

Le matériel mis en oeuvre pour le broyage de la fumée de silice est un broyeur planétaire MMS (Macchine Macina Smalto).

La suspension de fumée de silice obtenue a alors la granulométrie recherchée et mesurée à l'aide d'un granulomètre Sédigraph™ 5100 de la société Micromeritics.

### Essai n° 11

Cet essai illustre l'invention et est relatif à un mortier selon l'invention, dosé à 450 kg/m³ avec un rapport E/C égal à 0,60, mettant en oeuvre 30 % en poids sec, par rapport au poids sec de ciment, d'une suspension aqueuse d'un mélange carbonate de calcium-talc (75 % - 25 % en poids) à 60 % en matière sèche obtenue par cobroyage du mélange jusqu'à un diamètre médian égal à 0,74 micromètres mesuré au Sédigraph™ 5100, au moyen de 2,5 %, en poids sec par rapport au poids sec du mélange carbonate de calcium-talc, d'un copolymère, totalement neutralisé à la soude et composé de :
- 95 % en poids d'acide acrylique,
- 5 % en poids de méthacrylate de tristyrylphénol oxyéthylé 25 fois.

Le mode opératoire et le matériel mis en oeuvre pour le broyage du mélange carbonate de calcium-talc sont identiques à ceux de l'essai n° 4.

### Essai n° 12

Cet essai illustre l'invention et est relatif à un mortier selon l'invention, dosé à 450 kg/m³ avec un rapport E/C égal à 0,48, mettant en oeuvre 30 % en poids sec, par rapport au poids sec de ciment, d'une suspension aqueuse de craie à 59,9 % en matière sèche obtenue par broyage d'une suspension de craie jusqu'à une granulométrie, telle que 75,2 % des particules ont un diamètre inférieur à 2 micromètres et 30,7 % des particules ont un diamètre inférieur à 1 micromètre, mesurée au Sédigraph™ 5100, au moyen de 0,30 %, en poids sec par rapport au poids sec de craie, d'un copolymère non neutralisé et composé de :
- 14,1 % en poids d'acide acrylique,
- 3,4 % en poids d'acide méthacrylique,
- 82,5 % en poids de méthacrylate de méthoxy-PEG 2000.

Le mode opératoire et le matériel mis en oeuvre pour le broyage de la craie sont identiques à ceux de l'essai n° 4.

### Essai n° 13

Cet essai illustre l'invention et est relatif à un mortier selon l'invention, dosé à 450 kg/m³ avec un rapport E/C égal à 0,52, mettant en oeuvre 30 % en poids sec, par rapport au poids sec de ciment, d'une suspension aqueuse de carbonate de calcium précité (appelé PCC) à 59,8 % en matière sèche obtenue par broyage d'une suspension de PCC jusqu'à une granulométrie, telle que 96,8 % des particules ont un diamètre inférieur à 2 micromètres et 81,4 % des particules ont un diamètre inférieur à 1 micromètre, mesurée au Sédigraph™ 5100, au moyen de 0,80 %, en poids sec par rapport au poids sec de PCC, d'un copolymère neutralisé à 50 % molaire par de la triéthanolamine et composé de :
- 42,0 % en poids d'acide acrylique
- 42,0 % en poids d'acrylamide,
- 11,0 % en poids de méthacrylate d'éthylène glycol condensé avec du toluène düsocyanate et du nonylphénol oxyéthylé 50 fois,
- 5,0 % en poids d'acrylate d'éthyle.

Le mode opératoire et le matériel mis en oeuvre pour le broyage du PCC sont identiques à ceux de l'essai n° 4.

### Essai n° 14

Cet essai illustre l'invention et est relatif à un mortier selon l'invention, dosé à 450 kg/m³ avec un rapport E/C égal à 0,52, mettant en oeuvre 30 % en poids sec, par rapport au poids sec de ciment, d'une suspension aqueuse de dolomie à 59,5 % en matière sèche obtenue par broyage d'une suspension de dolomie jusqu'à une granulométrie, telle que 66,0 % des particules ont un diamètre inférieur à 2 micromètres et 42,3 % des particules ont un diamètre inférieur à 1 micromètre, mesurée au Sédigraph™ 5100, au moyen de 0,80 %, en poids sec par rapport au poids sec de dolomie, d'un copolymère neutralisé à 85 % en moles par de l'ammoniaque et composé de :
- 76,0 % en poids d'acide acrylique,
- 15,0 % en poids l'acide 2-acrylamido-2-méthyl-1-propane sulfonique,
- 9,0 % en poids d'acide itaconique.

Le mode opératoire et le matériel mis en oeuvre pour le broyage de la dolomie sont identiques à ceux de l'essai n° 4.

### Essai n° 15

Cet essai illustre l'invention et est relatif à un mortier selon l'invention, dosé à 450 kg/m³ avec un rapport E/C égal à 0,50, mettant en oeuvre 30 % en poids sec, par rapport au poids sec de ciment, d'une suspension aqueuse de silice à 58,2 % en matière sèche obtenue par broyage d'une suspension de silice jusqu'à un diamètre médian égal à 2,51 micromètres mesuré au Sédigraph™ 5100, au moyen de 0,50 %, en poids sec par rapport au poids sec de silice, d'un homopolymère de l'acide méthacrylique totalement neutralisé au lithium.

Le broyage de la silice est effectuée dans un bécher de 1 litre contenant 1 kg de billes de broyage de diamètre compris entre 0,6 et 1 mm.

### Essai n° 16

Cet essai illustre l'invention et est relatif à un mortier selon l'invention, dosé à 450 kg/m³ avec un rapport E/C égal à 0,56, mettant en oeuvre 10 % en poids sec, par rapport au poids sec de ciment, d'une suspension aqueuse de zéolithe à 30,6 % en matière sèche obtenue par broyage d'une suspension de zéolithe jusqu'à un diamètre médian égal à 1,67 micromètres mesuré au Sédigraph™ 5100, au moyen de 0,50 %, en poids sec par rapport au poids sec de zéolithe, d'un polyaspartate de sodium.

Le mode opératoire et le matériel mis en oeuvre pour le broyage de la zéolithe sont identiques à ceux de l'essai n° 15.

### Essai n° 17

Cet essai illustre l'invention et est relatif à un mortier selon l'invention, dosé à 450 kg/m³ avec un rapport E/C égal à 0,68, mettant en oeuvre 30 % en poids sec, par rapport au poids sec de ciment, d'une suspension aqueuse de zéolithe à 30,6 % en matière sèche obtenue par broyage d'une suspension de zéolithe jusqu'à un diamètre médian égal à 1,67 micromètres mesuré au Sédigraph™ 5100, au moyen de 0,50 %, en poids sec par rapport au poids sec de zéolithe, d'un polyaspartate de sodium.

Le mode opératoire et le matériel mis en oeuvre pour le broyage de la zéolithe sont identiques à ceux de l'essai n° 15.

### Essai n° 18

Cet essai illustre l'invention et est relatif à un mortier selon l'invention, dosé à 450 kg/m³ avec un rapport E/C égal à 0,61, mettant en oeuvre 30 % en poids sec, par rapport au poids sec de ciment, d'une suspension aqueuse de cendres volantes à 39,2 % en matière sèche obtenue par broyage d'une suspension de cendres volantes jusqu'à un diamètre médian égal à 5,27 micromètres mesuré au Sédigraph™ 5100, au moyen de 0,50 %, en poids sec par rapport au poids sec de cendres volantes, d'un polynaphtalène sulfonate de sodium.

Le mode opératoire et le matériel mis en oeuvre pour le broyage des cendres volantes sont identiques à ceux de l'essai n° 15

### Essai n° 19

Cet essai illustre l'invention et est relatif à un mortier selon l'invention, dosé à 450 kg/m³ avec un rapport E/C égal à 0,55, mettant en oeuvre 30 % en poids sec, par rapport au poids sec de ciment, d'une suspension aqueuse de diatomite à 42,2 % en matière sèche obtenue par broyage d'une suspension de diatomite jusqu'à un diamètre médian égal à 4,78 micromètres mesuré au Sédigraph™ 5100, au moyen de 0,50 %, en poids sec par rapport au poids sec de diatomite, d'un lignosulfonate de sodium.

Le mode opératoire et le matériel mis en oeuvre pour le broyage de diatomite sont identiques à ceux de l'essai n° 15

### Essai n° 20

Cet essai illustre l'invention et est relatif à un mortier selon l'invention, dosé à 450 kg/m³ avec un rapport E/C égal à 0,57, mettant en oeuvre 30 % en poids sec, par rapport au poids sec de ciment, d'une suspension aqueuse de métakaolin à 33,6 % en matière sèche obtenue par broyage d'une suspension de métakaolin jusqu'à un diamètre médian égal à 3,46 micromètres mesuré au Sédigraph™ 5100, au moyen de 0,50 %, en poids sec par rapport au poids sec de métakaolin, d'un mélange composé de 90 % en poids d'un polyacrylate de sodium et 10 % en poids d'un tensio-actif commercialisé par la société BASF sous le nom de Pluronic™ PE 3100. Le mode opératoire et le matériel mis en oeuvre pour le broyage du métakaolin sont identiques à ceux de l'essai n° 15.

### Essai n° 21

Cet essai illustre l'invention et est relatif à un mortier selon l'invention, dosé à 450 kg/m³ avec un rapport E/C égal à 0,56, mettant en oeuvre 30 % en poids sec, par rapport au poids sec de ciment, d'une suspension aqueuse de laitier à 52,4 % en matière sèche obtenue par broyage d'une suspension de laitier jusqu'à un diamètre médian égal à 10,64 micromètres mesuré au Sédigraph™ 5100, au moyen de 0,50 %, en poids sec par rapport au poids sec de laitier, d'un copolymère totalement neutralisé à la soude et composé de :
- 54,5 % en poids d'acide acrylique,
- 34,6 % en poids de phosphate de méthacrylate d'éthylène glycol,
- 10,8 % en poids de méthacrylate de méthyle.

Le mode opératoire et le matériel mis en oeuvre pour le broyage du laitier sont identiques à ceux de l'essai n° 15.

Pour les différents essais, les résultats de mesure de la résistance à la compression à 2 jours, déterminés selon la même méthode que celle décrite dans les exemples précédents, sont rassemblés dans les tableaux IIIa. et IIIb. suivants.

**TABLEAU III**

| | TEMOIN | INVENTION | INVENTION | INVENTION | INVENTION | INVENTION |
|---|---|---|---|---|---|---|
| ESSAIE n° | 9 | 10 | 11 | 12 | 13 | 14 |
| Masse de ciment en g | 450 | 450 | 450 | 450 | 450 | 450 |
| Masse de sable en g | 1569 | 1487 | 1388 | 1436 | 1355 | 1485 |
| Masse de suspension minérale ou slurry en g | 0 | 181 | 229 | 225 | 226 | 226 |
| Dosage en eau efficace en g | 248 | 267 | 269 | 214 | 233 | 234 |
| Rapport Eau efficace/Ciment | 0,55 | 0,59 | 0,60 | 0,48 | 0,52 | 0,52 |
| Résistance à la compression en KN à 2 jours | 40 | 42,4 | 44,4 | 64 | 55,1 | 42,2 |
| Grain de résistance en % à 2 jours | 0 | 6 | 11 | 60 | 38 | 5 |

**TABLEAU IIIb.**

| | INVENTION | INVENTION | INVENTION | INVENTION | INVENTION | INVENTION | INVENTION |
|---|---|---|---|---|---|---|---|
| ESSAI n° | 15 | 16 | 17 | 18 | 19 | 20 | 21 |
| Masse de ciment en g | 450 | 450 | 450 | 450 | 450 | 450 | 450 |
| Masse de sable en g | 1499 | 1494 | 1348 | 1406 | 1395 | 1490 | 1443 |
| Masse de suspension minérale ou slurry en g | 232 | 147 | 441 | 344 | 319 | 134 | 258 |
| Dosage en eau efficace en g | 225 | 252 | 306 | 275 | 246 | 257 | 252 |
| Rapport Eau efficace/Ciment | 0,50 | 0,56 | 0,68 | 0,61 | 0,55 | 0,57 | 0,56 |
| Résistance à la compression en KN à 2 jours | 51,3 | 56,0 | 48,0 | 48,4 | 53,6 | 45,2 | 48.4 |
| Gain de résistance en % à 2 jours | 28 | 40 | 20 | 21 | 34 | 13 | 21 |

La lecture des résultats des Tableaux IIIa. et IIIb. ci-dessus permet de mettre en évidence que les propriétés mécaniques de résistance aux jeunes âges, à la compression d'un mortier (résistance à 2 jours) sont significativement améliorées par la mise en oeuvre, selon l'invention, d'une suspension ou "slurry" de différentes charges minérales broyées mettant en oeuvre différents agents de broyage.

Il est à noter que l'homme du métier, qui a lu les exemples précédents relatifs à un mortier, pourra prédire sans risque la performance de bétons qui seraient constitués de ces mêmes mortiers auxquels serait ajoutée une proportion de gravillons (d/D).

De même l'évolution des performances de coulis (mortiers auxquels la fraction sable est enlevée) est de même tendance.

## Revendications

1. Procédé visant à incorporer,
à la préparation pour matrice cimentaire ou liant hydraulique choisi parmi un bétons, un mortier, un béton hydraulique, un coulis ou encore une composition à base de ciment et/ou de sulfate de calcium hémihydrate dans le but de lui conférer une résistance mécanique améliorée,
une charge minérale qui est le carbonate de calcium naturel,
sous forme de suspension aqueuse de cette charge minérale, **caractérisé en ce que** ladite charge minérale est en suspension aqueuse à l'état broyé et **en ce que** ladite suspension aqueuse de charge minérale broyée contient au moins un agent d'aide au broyage consistant en un polymère de monomères éthyléniquement insaturés choisis parmi :
a) au moins un monomère anionique ;
b) éventuellement au moins un monomère non ionique ;
c) éventuellement au moins un monomère éthylénique ester, éther ou uréthanne alkoxy-, aryloxy-, alkylaryloxy-, arylalkyloxy-polyalkylène glycol,
d) éventuellement un ou des monomères éthyléniques possédant au moins deux doubles liaisons polymérisables et appelés réticulants,
e) éventuellement au moins un monomère cationique.

2. Procédé selon la revendication 1 **caractérisé en ce que** le ou les monomères éthyléniquement insaturés sont choisis parmi l'un au moins des monomères anioniques éthyléniquement insaturés tels que l' acide acrylique et/ou méthacrylique, itaconique, crotonique, fumarique, anhydride maléique ou encore isocrotonique, aconitique, mésaconique, sinapique, undécylénique, angélique, l'acide 2-acrylamido-2-méthyl-1-propane sulfonique, l'acide 2-méthacrylamido-2₋méthyl-1-propane sulfonique, l'acide 3-méthacrylamido-2-hydeoxy-1-propane sulfunique, l'acide allylsulfonique, l'acide methallylsulfonique, l'acides allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène, sulfonique, l'acide 2-méthyl propène sulfonique, l'acide styrène sulfonique, l'acide vinyl sulfonique, le méthallylsulfonate de sodium, l'acrylate ou méthacrylate de sulfoiéthyle ou sulfopropyle, le sulfométhylacrylamide, le sulfométhylméthacrylamide, le phosphate ou phosphonate ou sulfate ou sulfonate d'acrylate ou méthacrylate d'alkylène glycol, le vinylphosphonate ou sont choisis parmi au moins un monomère non ionique tel que l'acrylamide ou le methacrylamide ou leurs dérives, les alkyl-esters en C₁ à C₄₀ des acides acryliques ou méthacryliques, l'acétate de vinyle, la vinylpyrrolidone, le styrène ou encore l'alphamethyl-styrène ou, sont choisis parmi au moins un monomère éthylénique uréthanne alkoxy-, aryloxy-, alkylaryloxy-, arylalkyloxy-polyalkylène glycol, ou un monomère éthylénique ester alkoxy-, aryloxy-, alkylaryloxy--, arylalkyloxy-polyalkylène glycol ou encore un aAoxy-; aryloxy-, alkylaryloxy- arylalkyloxy-acrylate ou méthacrylate ou hémimaléate oxyalkylé, oxyarylé, oxyarylalkylé, oxyalkylarylé (le nombre d'oxyde d'alkylène, d'arylène, d'alkylarylène ou d'arylalkylène étant compris entre 1 et 124), ou encore un monomère éthylénique éther alkoxy-, aryloxy-, alkylaryloxy-, arylalkyloxy-polyalkylène glycol, ou un où des monomères éthyléniques possédant au moins deux doubles liaisons polymérisables, appelés réticulants choisis dans le groupe constitué par le diméthacrylate d'éthylène glycol, le divinylacétylène, le divinylbonzène, le triméthylolpropanetriacrylate, l'acrylate d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou au moins un monomère cationique choisi parmi le méthacrylamido propyl triméthyl ammonium chlorure ou sulfate, le méthacrylate de triméthyl ammonium éthyl chlorure ou sulfate, ainsi que leurs homologues en acrylate et en acrylamide quaternisés ou non et/ou le diméthyldiallylchlorure d'ammonium.

3. Procédé selon l'une des revendications 1 à 2 **caractérisé en ce que** le ou les monomères anioniques sont choisis parmi l'acide acrylique, laide méthacrylique, l'acide 2-acrylamido-2-méthyl-1-propane sulfonique, l'acide 2-methacrytamido-2-méthyl-l-propane sulfonique, l'acide 3-méoEacrylamido-2-hydroxy-J_{:}"propa_{J}1c sulfonique, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane :sulf6nique, l'acide 2-méthyle propène-1-sulfonique, l'acide éthylène sulfonique, l'acide propène sulfonique, l'acide 2-méthyl propène sulfonique, l'acide styrène sulfonique, l'acide vinyl sulfonique, le méthallylsulfonate de sodium, l'acrylate ou méthacrylate de sulfopropyle, le sulfométhylacrylamide, le sulfométhylméthacrylamide, le phosphate ou phosphonate ou sulfate ou sulfonate d'acrylate ou méthacrylate d'alkylène glycol, l'acide itaconique, l'anhydride maléique, le méthallylsulfonate de sodium, l'acide styrène sulfonique et plus particulièrement choisis parmi parmi l'acide acrylique, l'acide méthacrylique, l'acide 2-acrylamido-2-mcthyl-l-propane sulfonique, l'acide éthylène sulfonique, l'acide propène sulfonique, l'acide 2-méthyl propène sulfonique, le phosphate de méthacrylate d'éthylène glycol ou encore le phosphate d'acrylate d'éthylène glycol.

4. Procédé selon l'une des revendications 1 à 2 **caractérisé en ce que** le ou tes monomères non ioniques sont choisis plus particulièrement parmi l'acrylamide ou l'acrylate d'éthyle.

5. Procédé selon l'une des revendications 1 à 2 **caractérisé en ce que** le ou les monomères éthyléniques uréthanne alkoxy-, aryloxy-, alkylaryloxy-, arylalkyloxy-polyalkylène glycol sont particulièrement choisis parmi les produits de réaction d'alkyloxy-polyalkylène glycol avec un isocyanate insaturé polymérisable et plus particulièrement parmi les produits de réaction de méthoxy-polyéthylène glycol, avec un isocyanate acrylique, méthacrylique, vinylique ou encore allylique, ledit polyéthylène glycol étant défini par un poids moléculaire supérieur à 300, et **en ce que** le ou les monomères éthyléniques ester alkoxy-, aryloxy-, alkylaryloxy-, arylalkyloxy-polyalkylène glycol sont choisis parmi les acrylates, méthacrylates ou hémimaléates d' alkoxy-, aryloxy-, alkylaryloxy-, arylalkyloxy-polyalkylène glycol ou encore parmi les acrylates, méthacrylates ou hémimaléates oxyalkylés, oxyarylés, oxyarylalkylés ou oxyalkylarylés (le nombre d'oxyde d'alkylène, d'arylène, d'alkylarylène ou d'arylalkylène étant compris entre 1 et 120) et plus particulièrement parmi les acrylates, méthacrylates ou hémimaléates d'alkoxy-polyethylene glycol, ledit polyéthylène glycol étant défini par un poids moléculaire supérieur à 300.

6. Procédé selon la revendication 1 **caractérisé en ce que** ledit agent d'aide au broyage consiste en un copolymère de monomères éthyléniquement insaturés choisis parmi les monomères cationiques monomères éthyléniquement insaturés tels que le méthacrylamido propyl trimethyl ammonium chlorure ou sulfate, le méthacrylate de triméthyl ammonium éthyl chlorure ou sulfate, ainsi que leurs homologues en acrylate et en acrylamide-quaternisés ou non et/ou le diméthyldiallylchlorure.

7. Procédé selon l'une quelconque des revendications 1 à 6 **caractérisé en ce que** l'agent d'aide au broyage est fractionné ultérieurement à l'étape de polymérisation.

8. Procédé selon l'une quelconque des revendications 1 à 7 **caractérisé en ce que** l'agent d'aide au broyage est mis en oeuvre sous sa forme totalement acide.

9. Procédé selon l'une quelconque des revendications 1 à 7 **caractérisé en ce que** l'agent d'aide au broyage est mis en oeuvre sous sa forme partiellement neutralisée ou totalement neutralisée par un ou plusieurs agents de neutralisation disposant d'une fonction monovalente et éventuellement d'une fonction polyvalente.

10. Procédé selon la revendication 9 **caractérisé en ce que** les agents de neutralisation disposant d'une fonction monovalente sont choisis dans le groupe constitué par les composés contenant des cations alcalins, en particulier le sodium et le potassium ou encore le lithium, l'ammonium, ou bien les amines primaires ou secondaires aliphatiques et/ou cycliques telles que les éthanolamines, la mono et diéthylamine ou encore la cyclohexylamine.

11. Procédé selon la revendication 9 **caractérisé en ce que** les agents de neutralisation disposant d'une fonction polyvalente sont choisis dans le groupe constitué par les composés contentant des cations divalents alcalino-terreux, en particulier le magnésium et le calcium ou encore le zinc, de même que par les cations trivalents, dont en particulier l'aluminium ou encore par certains composés contenant des cations de valence plus élevée.

12. Procédé selon l'une des revendications 1 à 11 **caractérisé en ce que** la ou les charges sont en suspension aqueuse ayant une concentration en matière sèche allant de 10 % à 85 % en poids.

## Claims

1. A process aimed at incorporating,
in the preparation for a cement matrix or hydraulic binder chosen from a concrete, a mortar, a hydraulic concrete, a grout or also a composition based on cement and/or calcium sulphate hemihydrate for the purpose of conferring improved mechanical strength on it,
a mineral filler which is natural calcium carbonate,
in the form of an aqueous suspension of this mineral filler, **characterised in that** the said mineral filler is in aqueous suspension in the ground state and **in that** the said aqueous suspension of ground mineral filler contains at least one grinding aid agent consisting in a polymer of ethylenically unsaturated monomers chosen from:
a) at least one anionic monomer,
b) possibly at least one non-ionic monomer,
c) possibly at least one polyalkylene glycol ester, ether or urethane alkoxy-, aryloxy-, alkylaryloxy- arylalkyloxy-ethylenic monomer,
d) possibly one of the ethylenic monomers having at least two polymerisable double bonds and referred to as cross-linking agents,
e) possibly, at least one cationic monomer.

2. A process according to Claim 1, **characterised in that** the ethylenically unsaturated monomers are chosen from amongst at least one of the ethylenically unsaturated anionic monomers such as acrylic and/or methacrylic, itaconic, crotonic or fumaric acid, maleic anhydride or isocrotonic, aconitic, mesaconic, sinapic, undecylenic or angelic acid, 2-acrylamido-2-methyl-1-propane sulphonic acid, 2-methacrylamido-2-methyl-1-propane sulphonic acid, 3-methacrylamido-2-hydroxy-1-propane sulphonic acid, allylsulphonic acid, methallylsulphonic acid, allyloxybenzene sulphonic acid, methallyloxybenzene sulphonic acid, 2-hydroxy-3-(2-propenyloxy)propane sulphonic acid, 2-methyl-2-propene-1-sulphonic acid, ethylene sulphonic acid, propene sulphonic acid, 2-ethyl propene sulphonic acid, styrene sulphonic acid, vinyl sulphonic acid, sodium methallylsulphonate, sulphoethyl or sulphopropyl acrylate or methacrylate, sulphomethylacrylamide, sulphomethylmethacrylamide, alkylene glycol acrylate or methacrylate, phosphate or phosphonate or sulphate or sulphonate, or vinyl phosphonate, or are chosen from at least one non-ionic monomer such as acrylamide or methacrylamide or derivatives thereof, C₁ to C₄₀ acrylic or methacrylic acids alkyl-esters, vinyl acetate, vinylpyrrolidone, styrene or alphamethyl-styrene or are chosen from amongst at least one alkoxy-, aryloxy-, alkylaryloxy- arylalkyloxy-polyalkylene glycol ethylenic urethane monomer, or an alkoxy-, aryloxy-, alkylaryloxy- or arylalkyloxy-polyalkylene glycol ethylenic ester monomer or an oxyalkylated, oxyarylated, oxyarylalkylated or oxyalkylarylated alkoxy-, aryloxy-, alkylaryloxy- or arylalkyloxy-acrylate or methacrylate or hemimaleate (the alkylene, arylene, alkylarylene or arylalkylene oxide number being between 1 and 120), or also an alkoxy-, aryloxy-, alkylaryloxy- or arylalkyloxy-polyalkylene glycol ethylenic ether monomer, or one of the ethylenic monomers having at least two polymerisable double bonds, referred to as cross-linking agents, chosen from the group consisting of ethylene glycol dimethacrylate, divinylacetylene, divinylbenzene, trimethylolpropanetriacrylate, allyl acrylate, methylene-bis-acrylamide, methylene-bis-methacrylamide, tetrallyloxyethane, triallylcyanurates, allyl ethers obtained from polyols such as pentaerythritol, sorbitol, sucrose and at least one cationic monomer chosen from amongst methacrylamido propyl trimethyl ammonium chloride or sulfate, trimethyl ammonium ethyl methacrylate chloride or sulfate, as well as the corresponding acrylates or acrylamides quaternized or not and/or the dimethyldiallyl ammonium chloride.

3. A process according to one of Claims 1 to 2, **characterised in that** the anionic monomer or monomers are chosen from amongst acrylic acid, methacrylic acid, 2-acrylamido-2-methyl-1-propane sulphonic acid, 2-methacrylamido-2-methyl-1-propane sulphonic acid, 3-methacrylamido-2-hydroxy-1-propane sulphonic acid, allylsulphonic acid, methallylsulphonic acid, allyloxybenzene sulphonic acid, methallyloxybenzene sulphonic acid, 2-hydroxy-3-(2-propenyloxy)propane sulphonic acid, 2-methyl-2-propene-1-sulphonic acid, ethylene sulphonic acid, propene sulphonic acid, 2-methyl propene sulphonic acid, styrene sulphonic acid, vinyl sulphonic acid, sodium methallylsulphonate, sulphopropyl acrylate or methacrylate, sulphomethylacrylamide, sulphomethylmethacrylamide, alkylene glycol acrylate or methacrylate phosphate or phosphonate or sulphate or sulphonate, itaconic acid, maleic anhydride, sodium methallylsulphonate, styrene sulphonic acid and more particularly chosen from amongst acrylic acid, methacrylic acid, 2-acrylamido-2-methyl-1-propane sulphonic acid, ethylene sulphonic acid, propene sulphonic acid, 2-methyl propene sulphonic acid, ethylene glycol methacrylate phosphate or also ethylene glycol acrylate phosphate.

4. A process according to one of Claims 1 to 2, **characterised in that** the non-ionic monomer or monomers are chosen more particularly from amongst acrylamide or ethyl acrylate.

5. A process according to one of Claims 1 to 2, **characterised in that** the alkoxy-, aryloxy-, alkylaryloxy- or ylalkyloxy-polyalkylene glycol ethylenic urethane monomer or monomers are particularly chosen from amongst the reaction products of alkyloxy-polyalkylene glycol with a polymerisable unsaturated isocyanate and more particularly from amongst the reaction products of methoxy-polyethylene glycol with an acrylic, methacrylic, vinyl or allyl isocyanate, the said polyethylene glycol being defined by a molecular weight greater than 300, and **in that** the alkoxy-, aryloxy-, alkylaryloxy- or arylalkyloxy-polyalkylene glycol ethylenic ester monomers are chosen from amongst the alkoxy-, aryloxy-, alkylaryloxy- or arylalkyloxy-polyalkylene glycol acrylates, methacrylates or hemimaleates or from amongst the oxyalkylated, oxyarylated, oxyarylalkylated or oxylalkylarylated acrylates, methacrylates or hemimaleates (the alkylene, arylene, alkylarylene or arylalkylene oxide number being between 1 and 120) and more particularly from amongst the alkoxy-polyethylene glycol acrylates, methacrylates or hemimaleates, the said polyethylene glycol being defined by a molecular weight greater than 300.

6. A process according to the claim 1, **characterised in that** the said grinding aid agent consists of copolymer of ethylenically unsaturated monomers chosen from ethylenically unsaturated cationic monomers such as methacrylamido propyl trimethyl ammonium chloride or sulfate, trimethyl ammonium ethyl methacrylate chloride or sulfate, as well as the corresponding acrylates or acrylamides quaternized or not and/or the dimethyldiallyl chloride.

7. A process according to any one of Claims 1 to 6, **characterised in that** the grinding aid agent is fractionated subsequently to the polymerisation step.

8. A process according to any one of Claims 1 to 7, **characterised in that** the grinding aid agent is used in its completely acidic form.

9. A process according to any one of Claims 1 to 7, **characterised in that** the grinding aid agent is used in its partially neutralised form or completely neutralised by one or more neutralisation agents having a monovalent function and possibly a polyvalent function.

10. A process according to Claim 9, **characterised in that** the neutralisation agents with a monovalent function are chosen from the group consisting of compounds containing alkaline cations, in particular sodium, potassium or lithium, ammonium or primary or secondary aliphatic and/or cyclic amines such as ethanolamines, mono- and diethylamine or cyclohexylamine.

11. A process according to Claim 9, **characterised in that** the neutralisation agents with a polyvalent function are chosen from the group consisting of compounds containing divalent alkaline-earth cations, in particular magnesium and calcium or zinc, as well as trivalent cations, including in particular aluminium, or certain compounds containing cations with a higher valency.

12. A process according to one of Claims 1 to 11, **characterised in that** the filler or fillers are in aqueous suspension having a concentration of dry matter ranging from 10% to 85% by weight.

## Patentansprüche

1. Verfahren zum Einarbeiten
eines mineralischen Füllstoff, bei dem es sich um natürliches Calciumcarbonat handelt,
in die Zubereitung für eine zementartige Matrix oder ein hydraulisches Bindemittel, ausgewählt aus einem Beton, einem Mörtel, einem hydraulischen Beton, einer Schlämme oder auch einer Zusammensetzung auf Basis von Zement und/oder Calciumsulfat-Halbhydrat, um dieser eine verbesserte Festigkeit zu verleihen,
wobei der mineralische Füllstoff in Form einer wässrigen Suspension vorliegt, **dadurch gekennzeichnet, dass** der mineralische Füllstoff in gemahlenenm Zustand in wässriger Suspension vorliegt und dadurch, dass der gemahlene mineralische Füllstoff mindestens einen Mahlhilfsstoff enthält, der aus einem Polymer aus ethylenisch ungesättigten Monomeren besteht, welche aus den folgenden ausgewählt sind:
a) mindestens einem anionischen Monomer;
b) möglicherweise mindestens einem nichtionischen Monomer;
c) möglicherweise mindestens einem ethylenischen Alkoxy-, Acyloxy-, Alkylaryloxy-, Arylalkyloxy-Polyalkylenglykol-Monomer vom Typ Ester, Ether oder Urethan,
d) möglicherweise einem oder mehreren ethylenischen Monomeren, die mindestens zwei polymerisierbare Doppelbindungen besitzen und als Vernetzungsmittel bezeichnet werden,
e) möglicherweise mindestens einem kationischen Monomer.

2. Verfahren nach Anspruch 1, **dadurch gekennzeichnet, dass** das oder die ethylenisch ungesättigten Monomere aus mindestens einem der anionischen ethylenisch ungesättigen Monomere wie etwa Acryl- und/oder Methacrylsäure, Itaconsäure, Crotonsäure, Fumarsäure, Maleinsäureanhydrid oder auch Isocrotonsäure, Aconitsäure, Mesaconsäure, Sinapinsäure, Undecylensäure, Angelikasäure, 2-Acrylamido-2-methyl-1-propansulfonsäure, 2-Methacrylamido-2-methyl-1-propansulfonsäure, 3-Methacrylamido-2-hydroxy-1-propansulfonsäure, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen-1-sulfonsäure, Ethylensulfonsäure, Propensulfonsäure, 2-Methylpropensulfonsäure, Styrolsulfonsäure, Vinylsulfonsäure, Natriummethallylsulfonat, Sulfoethyl- oder Sulfopropylacrylat oder -methacrylat, Sulfomethylacrylamid, Sulfomethylmethacrylamid, dem Phosphat oder Phosphonat oder Sulfat oder Sulfonat von Alkylenglykolacrylat oder -methacrylat, Vinylphosphonat ausgewählt sind, oder aus mindestens einem nichtionischen Monomer wie etwa Acrylamid oder Methacrylamid oder deren Derivaten, den C₁ - C₄₀-Alkylestern von Acryl- oder Methacrylsäuren, Vinylacetat, Vinylpyrrolidon, Styrol oder auch alpha-Methylstyrol ausgewählt sind, oder aus mindestens einem ethylenischen Alkoxy-, Aryloxy-, Alkylaryloxy-, Arylalkyloxy-Polyalkylenglykol-Monomer vom Urethantyp, oder aus einem ethylenischen Alkoxy-, Aryloxy-, Alkylaryloxy-, Arylalkyloxy-Polyalkylenglykol-Monomer vom Estertyp oder auch aus einer Oxyalkyl-, Oxyaryl-, Oxyarylalkyl-, Oxyalkylarylverbindung von Alkoxy-, Aryloxy-, Alkylaryloxy-, Arylalkyloxyacrylat oder -methacrylat oder - hemimaleat (wobei die Anzahl an Alkylen-, Arylen-, Alkylarylen- oder Arylalkylenoxid im Bereich von 1 bis 120 liegt), oder auch aus einem ethylenischen Alkoxy-, Aryloxy-, Alkylaryloxy-, Arylalkyloxy-Polyalkylenglykol-Monomer vom Ethertyp ausgewählt sind, oder aus einem oder mehreren ethylenischen Monomeren, die mindestens zwei polymerisierbare Doppelbindungen besitzen, als Vernetzungsmittel bezeichnet werden und aus der Gruppe ausgewählt sind, die aus Ethylenglykoldimethacrylat, Divinylacetylen, Divinylbenzol, Trimethylolpropanetriacrylat, Allylacrylat, Methylen-bis-acrylamid, Methylen-bis-methacrylamid, Tetrallyloxyethan, den Triallylcyanuraten, den Allylethern, welche ausgehend von Polyolen wie etwa Pentaerythrit, Sorbit, Saccharose erhalten werden, besteht, oder aus mindestens einem kationischen Monomer, das aus Methacrylamidopropyltrimethytammoniumchlorid oder -sulfat, dem Methacrylat von Trimethylammoniumethylchlorid- oder sulfat sowie deren optional quaternisierten Acrylat- und Acrylamidhomologa und/oder Ammoniumdimethyldiallylchlorid ausgewählt ist.

3. Verfahren nach einem der Ansprüche 1 bis 2, **dadurch gekennzeichnet, dass** das oder die anionischen Monomere aus Acrylsäure, Methacrylsäure, 2-Acrylamido-2-methyl-1-propansulfonsäure, 2-Methacrylamido-2-methyl-1-propansulfonsäure, 3-Methacrylamido-2-hydroxy-1-propansulfonsäure, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen-1-sulfonsäure, Ethylensulfonsäure, Propensulfonsäure, 2-Methylpropensulfonsäure, Styrolsulfonsäure, Vinylsulfonsäure, Natriummethallylsulfonat, Sulfopropylacrylat oder -methacrylate, Sulfomethylacrylamid, Sulfomethylmethacrylamid, dem Phosphat oder Phosphonat oder Sulfat oder Sulfonat von Alkylenglykolacrylat - oder methacrylat, Itaconsäure, Maleinsäureanhydrid, Natriummethallylsulfonat, Styrolsulfonsäure ausgewählt sind und insbesondere aus Acrylsäure, Methacrylsäure, 2-Acrylamido- 2-methyl-1-propansulfonsäure, Ethylensulfonsäure, Propensulfonsäure, 2-Methylpropenesulfonsäure, dem Phosphat von Ethylenglykohnethacrylat oder auch dem Phosphat von Ethylenglykolacrylat ausgewählt sind.

4. Verfahren nach einem der Ansprüche 1 bis 2, **dadurch gekennzeichnet, dass** das oder die nichtionischen nichtionischen Monomere insbesondere aus Acrylamid oder Ethylacrylat ausgewählt sind.

5. Verfahren nach einem der Ansprüche 1 bis 2, **dadurch gekennzeichnet, dass** das oder die ethylenischen Alkoxy-, Aryloxy-, Alkylaryloxy-, Arylalkyloxy-Polyalkylenglykol-Monomere vom Urethantyp insbesondere aus den Reaktionsprodukten von Alkyloxypolyalkylenglykol mit einem polymerisierbaren ungesättigten Isocyanat ausgewählt sind und ganz besonders aus den Reaktionsprodukten von Methoxypolyethylenglykol mit einem Acryl-, Methacryl-, Vinyl- oder auch Allylisocyanat, wobei der Polyethylenglykol durch ein Molekulargewicht von mehr als 300 definiert ist, und dadurch, dass das oder die ethylenischen Alkoxy-, Aryloxy-, Alkylaryloxy-, Arylalkyloxy-Polyalkylenglykol-Monomere vom Estertyp aus den Acrylaten, Methacrylaten oder Hemimaleaten von Alkoxy-, Alkylaryloxy-, Arylalkyloxypolyalkylenglykol oder auch aus den Oxyalkyl-, Oxyaryl-, Oxyarylalkyl- oder Oxyalkylarylverbindungen von Acrylaten, Methacrylaten oder Hemimaleaten ausgewählt sind (wobei die Anzahl an Alkylen-, Arylen-, Alkylarylen- oder Arylalkylenoxid im Bereich von 1 bis 120 liegt), und insbesondere aus den Acrylaten, Methacrylaten oder Hemimaleaten von Alkoxypolyethylenglykol, wobei der Polyethylenglykol durch ein Molekulargewicht von mehr als 300 definiert ist.

6. Verfahren nach Anspruch 1, **dadurch gekennzeichnet, dass** das Mahlhilfsmittel aus einem Copolymer von ethylenisch ungesättigten Monomeren besteht, die aus den kationischen Monomeren ethylenisch ungesättigten Monomeren wie etwa Methacrylamidopropyltrimethylammoniumchlorid- oder -sulfat, dem Methacrylat von Trimethylammoniumethylchlorid oder -sulfat sowie deren optional quaternisierten Acrylat- und Acrylamidhomologa und/oder Dimethyldiallylchlorid ausgewählt ist.

7. Verfahren nach einem beliebigen der Ansprüche 1 bis 6, **dadurch gekennzeichnet, dass** das Mahlhilfsmittel nach dem Polymerisierungsschritt fraktioniert wird.

8. Verfahren nach einem beliebigen der Ansprüche 1 bis 7, **dadurch gekennzeichnet, dass** das Mahlhilfsmittel in seiner vollständig sauren Form eingesetzt wird.

9. Verfahren nach einem beliebigen der Ansprüche 1 bis 7, **dadurch gekennzeichnet, dass** das Mahlhilfsmittel in seiner teilweise neutralisierten oder vollständig neutralisierten Form eingesetzt wird, wobei dies durch ein oder mehrere Neutralisierungsmittel erfolgt, die über eine einwertige und möglicherweise eine zweiwertige Funktion verfügen.

10. Verfahren nach Anspruch 9, **dadurch gekennzeichnet, dass** die Neutralisierungsmittel, welche über eine einwertige Funktion verfügen, aus der Gruppe ausgewählt sind, die aus den Verbindungen, welche Alkalikationen, insbesondere Natrium, Kalium oder auch Lithium, enthalten, aus Ammonium oder auch aus den aliphatischen und/oder cyclischen primären oder sekundären Aminen wie beispielsweise den Ethanolaminen, Mono- und Diethylamin oder auch Cyclohexylamin besteht.

11. Verfahren nach Anspruch 9, **dadurch gekennzeichnet, dass** die Neutralisierungsmittel, welche über eine mehrwertige Funktion verfügen, aus der Gruppe ausgewählt sind, die aus den Verbindungen, welche zweiwertige Erdalkalikationen, insbesondere Magnesium und Calcium, oder auch Zink enthalten, sowie aus den dreiwertigen Kationen, davon insbesondere Aluminium, oder auch aus bestimmten Verbindungen, die höherwertige Kationen enthalten, besteht.

12. Verfahren nach einem der Ansprüche 1 bis 11, **dadurch gekennzeichnet, dass** der oder die Füllstoffe in einer wässrigen Suspension mit einem Trockenmassegehalt von 10 bis 85 Gew.-% vorliegen.
